# FASCICULE DE BREVET EUROPEEN

(11) **EP 1 687 456 B1**
(45) Date de publication et mention de la délivrance du brevet: **13.06.2007**
(21) Numéro de dépôt: 04805531.3
(22) Date de dépôt: 24.11.2004
(51) Int. Cl.: C22C 21/02, C22C 21/04, B23K 35/00, B23K 35/02

(54) **PROCEDE DE BRASAGE DE BANDES EN ALLIAGE D'ALUMINIUM**
VERFAHREN ZUM SCHWEISSEN VON BÄNDERN AUS ALUMINIUMLEGIERUNG
METHOD FOR WELDING STRIPS OF ALUMINIUM ALLOY

(30) Priorité: 28.11.2003 FR 0314000
(43) Date de publication de la demande: 09.08.2006
(73) Titulaire: ALCAN RHENALU, 75116 Paris (FR); ALCAN ROLLED PRODUCTS RAVENSWOOD LLC, Ravenswood, WV 26164 (US)
(72) Inventeur: DULAC, Sandrine, 38000 Grenoble (FR); HENRY, Sylvain, 38500 Voiron (FR)
(74) Mandataire: Marsolais, Richard
(86) Numéro de dépôt international: PCT/FR2004/003002
(87) Numéro de publication internationale: WO 2005/061743

(56) Documents cités:
- EP-A- 0 718 072
- EP-A- 1 170 118
- FR-A- 2 489 845
- FR-A- 2 826 979
- US-A- 4 649 087
- PATENT ABSTRACTS OF JAPAN vol. 0143, no. 56 (C-0745), 2 août 1990 (1990-08-02) & JP 02 129333 A (MITSUBISHI ALUM CO LTD), 17 mai 1990 (1990-05-17)

## Description

### Domaine de l'invention

L'invention concerne le brasage sans flux sous atmosphère contrôlée de bandes en alliage d'aluminium revêtues sur une ou deux faces d'un alliage de brasage, et destiné en particulier à la fabrication d'échangeurs de chaleur pour l'automobile ou le bâtiment.

### Etat de la technique

L'utilisation, pour l'application échangeurs, d'alliages d'âme à durcissement structural (notamment de) la série 6xxx : Al-Mg-Si) était très courante tant que le procédé de brasage utilisé était de type brasage sous vide. Le passage à la technologie du brasage sous atmosphère contrôlée avec flux non corrosif Nocolok®, en liaison avec le coût élevé associé aux fours sous vide et à leur maintenance, a mis un point d'arrêt à cet usage. Le procédé Nocolok® impose en effet des contraintes strictes sur l'utilisation d'alliages au magnésium, car cet élément réagit avec le flux, utilisé pour dissoudre la couche d'oxyde, et le rend inopérant. La teneur généralement donnée comme limite est de l'ordre de 0.3%. Au delà, une quantité très importante de flux serait nécessaire, ce qui rendrait l'opération extrêmement coûteuse.

Par ailleurs, la résistance à la corrosion d'un grand nombre de bandes pour échangeurs est basée sur la formation d'une couche anodique à l'interface âme/placage qui impose une très faible teneur en silicium dans l'âme. C'est le cas par exemple des alliages décrits dans le brevet EP 0326337 (Alcan).

Les alliages 6xxx ont donc été remplacés très majoritairement par des alliages 3xxx à bas magnésium et bas silicium et l'effet de durcissement structural a été perdu.

Des alliages d'âme de type 3xxx à durcissement structural ont été proposés récemment, par exemple dans le brevet EP 0718072 (Hoogovens Aluminium Walzprodukte) ou dans la demande EP 1254965 (SAPA Heat Transfer). Dans les deux cas, aucune modification n'a été apportée aux bandes pour améliorer leur brasabilité dans un four Nocolok® standard. Par conséquent, soit la teneur en magnésium doit être limitée à une valeur relativement faible (par exemple inférieure à 0.35% comme dans le cas de la demande EP 1254965), mais l'effet de durcissement structural est alors relativement réduit, soit il est nécessaire d'augmenter la quantité de flux déposée, ou d'utiliser un flux alternatif tel que le flux au césium décrit dans le brevet US 5771962 (Ford). Dans les deux cas, cela se traduit par une augmentation significative du coût de l'opération. L'utilisation des alliages Al-Mg-Si plaqués d'alliage de brassure 4 xxx sous vide ou avec flux est mentionnée dans FR-A-2 489 845.

L'invention vise à proposer un matériau qui possède à la fois des propriétés de durcissement structural, mais aussi une bonne aptitude au brasage dans les lignes Nocolok® existantes.

### Objet de l'invention

L'invention comme définie dans la revendication 1 a pour objet un procédé d'assemblage de tôles en alliage d'aluminium comportant un brasage sans flux sous atmosphère contrôlée à une température comprise entre 580 et 620°C, un refroidissement rapide et éventuellement un revenu à une température comprise entre 80 et 250°C, et dans lequel l'une au moins des tôles est constituée d'un alliage d'âme de composition (% en poids) :
Si: 0,3 - 1,0 Fe < 1,0 Cu : 0,3 -1,0 Mn: 0,3 - 2,0 Mg: 0,3 - 3,0 Zn < 6,0 Ti < 0,1 Zr < 0,3 Cr < 0,3 Ni < 2,0 Co < 2,0 Bi < 0,5 Y < 0,5 autres éléments < 0,05 chacun et 0,15 au total, reste aluminium, et revêtue sur au moins une face d'un alliage d'aluminium de brasage contenant de 4 à 15% de silicium et de 0,01 à 0,5% de l'un au moins des éléments Ag, Be, Bi, Ce, La, Pb, Pd, Sb, Y ou de mischmetal.

Une composition préférée pour l'alliage d'âme est :
Si: 0,3-1,0 Fe < 0,5 Cu: 0,35-1,0 Mn: 0,3-0,7 Mg : 0,35 - 0,7 Zn< 0,2 Ti < 0,1 Zr < 0,3 Cr < 0,3 Ni < 1,0 Co < 1,0 Bi<0,5 Y < 0,5 autres éléments < 0,05 chacun et 0,15 au total, reste aluminium,

Dans le cas de la fabrication d'échangeurs thermiques, le revenu peut s'effectuer en cours de fonctionnement dans les parties chaudes de l'échangeur.

### Description des figures

Les figures 1a et 1b représentent, respectivement en vue de dessus et vue de côté, les éprouvettes en V utilisées dans les exemples pour évaluer l'aptitude au brasage.
La figure 2 représente la définition de la largeur du joint brasé dans le test d'aptitude au brasage décrit dans les exemples.

### Description de l'invention

L'invention repose sur la sélection, pour le brasage sans flux, d'une composition particulière pour l'alliage d'âme, en combinaison -avec l'addition à l'alliage de placage d'un ou plusieurs éléments permettant d'en modifier les propriétés de surface, comme la tension superficielle ou la composition de la couche d'oxyde. L'alliage d'âme contient du manganèse et du cuivre, ainsi que du silicium et du magnésium pour permettre un durcissement par précipitation de Mg₂Si.

La teneur en silicium doit être supérieure à 0,3% pour permettre la formation d'une quantité suffisante de Mg₂Si, mais rester inférieure à 1% si on veut garder un écart suffisant entre les températures de fusion de l'alliage d'âme et de l'alliage de placage. La teneur en magnésium est comprise entre 0,3 et 3,0%, et de préférence entre 0,35 et 0,7%. Elle doit être suffisante pour permettre la formation de Mg₂Si, et n'est pas limitée, comme dans la demande EP 1254965, par le risque de réaction avec le flux, puisqu'il n'y en a pas. Contrairement à ce qui est préconisé dans la demande de brevet EP 1254965, on ne vise pas un excès de silicium par rapport à la quantité stoechiométrique pour former Mg₂Si, mais au contraire un excès de magnésium. Cependant, le magnésium ayant une influence défavorable sur la formabilité, il est souhaitable de le limiter à 0,7% pour les applications exigeant une mise en forme importante.

Le cuivre augmente la résistance mécanique de l'alliage lorsqu'il est en solution solide. Contrairement à l'enseignement de EP 1254965, la demanderesse n'a pas constaté de diminution de la résistance à la corrosion au-delà de 0,3% à condition de ne pas dépasser 1%, limite à partir de laquelle le cuivre précipite. Au contraire, la présence de cuivre en solution solide augmente le potentiel de corrosion. Une raison supplémentaire de ne pas dépasser 1% est d'éviter de trop abaisser la température de fusion de l'alliage.

L'alliage de placage est, de manière habituelle, un alliage d'aluminium contenant de 4 à 15% de silicium, et éventuellement d'autres éléments d'addition tels que Cu, Mg ou Zn. Une des caractéristiques de l'invention est d'ajouter à l'alliage de placage un ou plusieurs éléments permettant d'améliorer sa mouillabilité, appartenant au groupe constitué par Ag, Be, Bi, Ce, La, Pb, Pd, Sb, Y ou du mischmetal, qui est un mélange de terres rares non séparées. C'est cette meilleure mouillabilité qui permet d'éviter l'utilisation d'un flux au brasage, sans pour autant opérer sous vide.

L'alliage de brasage est le plus souvent plaqué sur l'alliage d'âme par colaminage. Dans le cas où l'alliage de brasage est plaqué sur une seule face, l'autre face peut être revêtue, de manière connue en soi, d'un alliage sacrificiel, généralement de type Al-Zn, destiné à améliorer la résistance à la corrosion de l'alliage d'âme.

L'alliage de brasage peut également être déposé sous forme de particules, notamment de particules Al-Si, comme décrit par exemple dans le brevet EP 0568568 (Alcan International). Pour le brasage sous atmosphère contrôlée, les particules d'alliage de brasage sont généralement associées à des particules de flux, en particulier de flux à base de fluorures comme le fluoro-aluminate de potassium, et d'un liant tel qu'une résine polymère. Un avantage particulier de l'invention dans ce cas est d'éviter la présence de flux dans le revêtement.

De 0,05 à 0,5% de bismuth et/ou de 0,01 à 0,5% d'yttrium peuvent également être incorporés en plus à l'alliage d'âme.

Le brasage s'effectue sans flux sous atmosphère contrôlée d'azote ou d'argon, à une température comprise entre 580 et 620°C, qui permet la fusion de l'alliage de brasage, mais assure également la mise en solution de l'alliage d'âme. Cette mise en solution est suivie d'un refroidissement rapide, par exemple à l'air pulsé. On peut effectuer un revenu de la pièce assemblée à une température comprise entre 80 et 250°C.

Dans le cas de la fabrication d'échangeurs thermiques, il est parfois possible d'effectuer le revenu en fonctionnement dans les parties les plus chaudes de l'échangeur, par exemple les tubes de radiateurs de refroidissement des moteurs d'automobile.

### Exemple

On a coulé plusieurs plaques d'alliages d'âme dont les compositions respectives sont indiquées au tableau 1:

**Tableau 1**

| **Alliage** | **Si** | **Fe** | **Cu** | **Mn** | **Mg** | **Ti** | **Bi** | **Y** | **Ca** |
|---|---|---|---|---|---|---|---|---|---|
| M | 0.40 | 0.22 | 0.63 | 0.57 | 0.47 | 0.08 | - | - | - |
| M + Bi | 0.39 | 0.22 | 0.62 | 0.59 | 0.49 | 0.09 | 0.15 | - | - |
| M + Y | 0.39 | 0.24 | 0.61 | 0.57 | 0.47 | 0.09 | | 0.05 | - |
| M + Ca | 0.40 | 0.22 | 0.63 | 0.57 | 0.47 | 0.08 | - | - | 0.05 |

ainsi que des plaques d'alliage de placage 4047 (A1-12%Si) ou 4047 + 0.19% Bi ou 4047 + 0.05% Y ou 4047 + 0.05% Ca. Des assemblages sont réalisés à partir de ces plaques de telle sorte que l'épaisseur d'alliage de placage représente 10% de l'épaisseur totale. Ces assemblages sont laminés à chaud, puis à froid de façon à produire des bandes plaquées d'épaisseur 0.3 mm. Ces bandes sont ensuite soumises à un traitement de restauration de 10 h à 260°C.

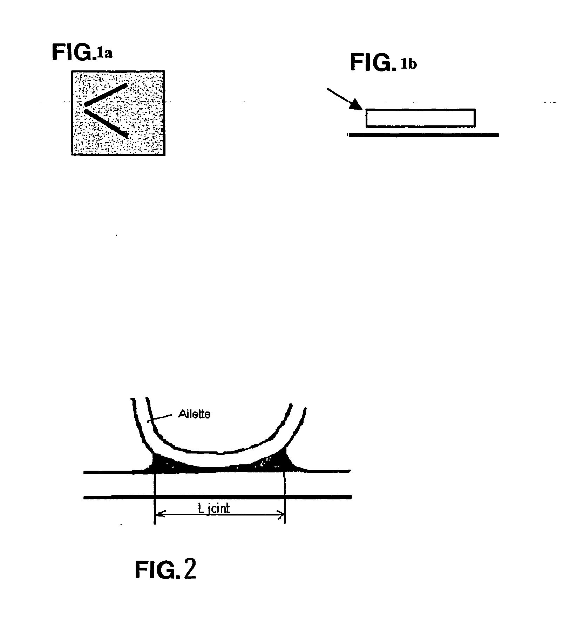

L'éprouvette décrite à la figure 1 a été utilisée pour évaluer la brasabilité de ces matériaux. Le « V » est constitué d'une bande nue en alliage 3003, à l'état H24, et d'épaisseur 0.3 mm. Un traitement de dégraissage de 15 min à 250°C est appliqué au métal à braser. Aucune autre préparation de surface n'est appliquée et en particulier aucun flux n'est déposé. Le brasage se fait dans un four en verre à double paroi qui permet de visualiser les mouvements de brasure liquide et la formation des joints au cours du traitement. Le cycle thermique est composé d'une phase de montée en température jusqu'à 610°C avec une vitesse d'environ 20°C/min, d'un maintien de 2 min à 610°C, et d'une descente à environ 30°C/min. Le tout se fait sous balayage continu d'azote, avec un débit de 81/min.

Les résultats sont qualifiés par une note de A à E selon l'échelle suivante :

| Note | **A** | **B** | **C** | **D** | **E** |
|---|---|---|---|---|---|
| Longueur de joint formée par rapport à la longueur totale | 100% | 90% | 75% | 50% | 0% |

Les résultats sont indiqués au tableau 2 :

**Tableau 2**

| **Ame** | **Placage** | **Brasabilité** |
|---|---|---|
| M | 4047 | E |
| M | 4047 + Bi | B |
| M + Bi | 4047 + Bi | A |
| M+Y | 4047+Y | B |
| M | 4047+Ca | E |

Les caractéristiques mécaniques sont mesurées sur les composites M/4047+Bi, M+Bi/4047+Bi et M+Y/4047+Y à la fois après brasage, et après différents traitements de revenu. Le tableau 3 présente les valeurs obtenues et les compare avec un alliage N utilisé classiquement pour les bandes destinées aux échangeurs, et de composition :

| **Alliage** | **Si** | **Fe** | **Cu** | **Mn** | **Mg** | **Ti** |
|---|---|---|---|---|---|---|
| N | 0.19 | 0.15 | 0.68 | 1.38 | - | 0.08 |

**Tableau 3**

| **Composite** | **Etat** | **Rₘ (MPa)** | **R_{0.2} (MPa)** | **A (%)** |
|---|---|---|---|---|
| M/4047 + Bi | Après brasage | 202 | 95 | 9,3 |
| M/4047 + Bi | Après brasage + 4 h à 180°C | 236 | 169 | 5,8 |
| M/4047 + Bi | Après brasage + 8 h à 180°C | 236 | 191 | 3,3 |
| M + Bi/4047 + Bi | Après brasage | 210 | 100 | 8,4 |
| M + Bi / 4047 + Bi | Après brasage + 4 h à 180°C | 231 | 172 | 4,8 |
| M + Bi / 4047 + Bi | Après brasage + 8 h à 180°C | 245 | 196 | 4,1 |
| M + Y / 4047 + Y | Après brasage | 207 | 95 | 9,4 |
| M + Y / 4047+Y | Après brasage+4h à 180°C | 240 | 170 | 6,4 |
| M + Y 4047 + Y | / Après brasage + 8 h à 180°C | 256 | 198 | 5,2 |
| N/4045 | Après brasage | 166 | 64 | 18,0 |
| N/4045 | Après brasage + 4 h à 180°C | 164 | 60 | 16,9 |
| N/4045 | Après brasage + 8 h à 180°C | 163 | 60 | 17,0 |

On constate l'effet très favorable du durcissement structural sur la résistance mécanique, surtout après revenu.

## Revendications

1. Procédé d'assemblage de tôles en alliage d'aluminium comportant un brasage sans flux sous atmosphère contrôlée d'azote et/ou d'argon à une température comprise entre 580 et 620°C, un refroidissement rapide et éventuellement un revenu à une température comprise entre 80 et 250°C, et dans lequel l'une au moins des tôles est constituée d'un alliage d'âme de composition (% en poids) :
Si : 0,3 - 1,0 Fe < 1,0 Cu:0,3-1,0 Mn:0,3-2,0 Mg : 0,3 - 3,0 Zn<6,0 Ti<0,1 Zr<0,3 Cr<0.3 Ni <2,0 Co<2.0 Bi < 0,5 Y<0,5 autres éléments < 0,05 chacun et 0,15 au total, reste aluminium, et revêtue sur au moins une face d'un alliage d'aluminium de brasage contenant de 4 à 15% de silicium et de 0,01 à 0,5% de l'un au moins des éléments Ag, Be, Bi, Ce, La, Pb, Pd, Sb, Y ou de mischmetal.

2. Procédé selon la revendication 1, **caractérisé en ce que** la teneur en cuivre de l'alliage d'âme est comprise entre 0,35 et 1%.

3. Procédé selon l'une des revendications 1 ou 2, **caractérisé en ce que** la teneur en manganèse de l'alliage d'âme est comprise entre 0,3 et 0,7%.

4. Procédé selon l'une des revendications 1 à 3, **caractérisé en ce que** la teneur en magnésium de l'alliage d'âme est comprise entre 0,35 et 0,7%.

5. Procédé selon l'une des revendications 1 à 4, **caractérisé en ce que** la teneur en zinc de l'alliage d'âme est inférieure à 0,2%.

6. Procédé selon l'une des revendications 1 à 5, **caractérisé en ce que** la teneur en bismuth de l'alliage d'âme est comprise entre 0,05 et 0,5%.

7. Procédé selon l'une des revendications 1 à 6, **caractérisé e**n ce que la teneur en yttrium de l'alliage d'âme est comprise entre 0,01 et 0,5%.

8. Procédé selon l'une des revendications 1 à 7, **caractérisé en ce que** l'alliage d'âme a pour composition :
Si : 0,3-1,0 Fe<0,5 Cu: 0,35-1,0 Mn: 0,3-0.7 Mg : 0,35-0,7 Zn<0,2 Ti<0,1 Zr<0,3 Cr<0,3 Ni<1,0 Co<1,0 Bi<0,5 Y < 0,5 autres éléments < 0,05 chacun et 0,15 au total, reste aluminium.

9. Procédé selon l'une des revendications 1 à 8, **caractérisé en ce que** l'alliage de brasage est plaqué sur l'alliage d'âme par colaminage.

10. Procédé selon l'une des revendications 1 à 8, **caractérisé en ce que** le revêtement d'alliage de brasage est constitué de particules, éventuellement enrobées dans une couche de résine.

11. Procédé selon l'une des revendications 1 à 10, **caractérisé en ce qu'**il est utilisé pour la fabrication d'échangeurs thermiques et que le revenu s'effectue en cours de fonctionnement des échangeurs dans leurs parties chaudes.

## Claims

1. Assembly method for aluminium alloy plates comprising fluxless brazing under controlled nitrogen and/or argon atmosphere at a temperature of between 580°C and 620°C, fast cooling and possibly ageing at a temperature of between 80°C and 250°C, and in which at least one of the plates is composed of a core alloy with composition (% by weight):
Si 0.3-1.0; Fe<1.0; Cu 0.3-1.0; Mn 0.3-2.0; Mg 0.3-3.0; Zn<6.0 Ti<0.1 Zr<0.3 Cr<0.3 Ni<2.0 Co<2.0 Bi<0.5 Y<0.5 other elements <0.05 each and 0.15 total, remainder aluminium, coated on at least one face with an aluminium brazing alloy containing 4% to 15% of silicon and 0.01% to 0.5% of at least one of the elements Ag, Be, Bi, Ce, La, Pb, Pd, Sb, Y or mischmetal.

2. Process according to claim 1, **characterised in that** the copper content of the core alloy is between 0.35% and 1%.

3. Process according to either claim 1 or 2, **characterised in that** the manganese content of the core alloy is between 0.3% and 0.7%.

4. Process according to one of claims 1 to 3, **characterised in that** the manganese content of the core alloy is between 0.35% and 0.7%.

5. Process according to one of claims 1 to 4, **characterised in that** the zinc content of the core alloy is less than 0.2%.

6. Process according to one of claims 1 to 5, **characterised in that** the bismuth content of the core alloy is between 0.05% and 0.5%.

7. Process according to one of claims 1 to 6, **characterised in that** the yttrium content of the core alloy is between 0.01% and 0.5%.

8. Process according to one of claims 1 to 7, **characterised in that** composition of the core alloy is:
Si 0.3-1.0; Fe<0.5; Cu 0.35-1.0; Mn 0.3-0.7; Mg 0.35-0.7; Zn<0.2; Ti<0.1; Zr<0.3; Cr<0.3; Ni<1.0; Co<1.0; Bi<0.5; Y<0.5; other elements <0.05 each and 0.15 total, remainder aluminium.

9. Process according to one of claims 1 to 8, **characterised in that** the brazing alloy is cladded onto the core alloy by co-rolling.

10. Process according to one of claims 1 to 8, **characterised in that** the brazing alloy coating is composed of particles, possibly coated with a resin layer.

11. Process according to one of claims 1 to 10, **characterised in that** it is used for manufacturing of heat exchangers and that ageing is done in hot parts during operation of exchangers.

## Patentansprüche

1. Verfahren zum Verbinden von Blechen aus Aluminiumlegierung, umfassend ein flussmittelfreies Löten unter kontrollierter Stickstoff-und/oder Argonatmosphäre bei einer Temperatur von 580 bis 620°C, ein schnelles Abkühlen und eventuell ein Auslagern bei einer Temperatur von 80 bis 250°C, bei welchem Verfahren mindestens eins der Bleche aus einer Kernlegierung besteht mit der Zusammensetzung (Gew.-%):
Si: 0,3 - 1,0 Fe < 1,0 Cu: 0,3 - 1,0 Mn: 0,3 - 2,0 Mg: 0,3 - 3,0 Zn < 6,0 Ti < 0,1 Zr < 0,3 Cr < 0,3 Ni < 2,0 Co < 2,0 Bi < 0,5 Y < 0,5, weitere Elemente jeweils < 0,05 und insgesamt 0,15, Rest Aluminium,
und auf mindestens einer Seite mit einer Aluminium-Lötlegierung beschichtet ist, welche 4 bis 15 % Silicium und 0,01 bis 0,5 % mindestens eines der Elemente Ag, Be, Bi, Ce, La, Pb Sb, Y oder Mischmetall enthält.

2. Verfahren nach Anspruch 1, **dadurch gekennzeichnet, dass** der Kupfergehalt der Kernlegierung zwischen 0,35 und 1 % liegt.

3. Verfahren nach einem der Ansprüche 1 oder 2, **dadurch gekennzeichnet, dass** der Mangangehalt der Kernlegierung zwischen 0,3 und 0,7 % liegt.

4. Verfahren nach einem der Ansprüche 1 bis 3, **dadurch gekennzeichnet, dass** der Magnesiumgehalt der Kernlegierung zwischen 0,35 und 0,7 % liegt.

5. Verfahren nach einem der Ansprüche 1 bis 4, **dadurch gekennzeichnet, dass** der Zinkgehalt der Kernlegierung unterhalb 0,2 % liegt.

6. Verfahren nach einem der Ansprüche 1 bis 5, **dadurch gekennzeichnet, dass** der Wismutgehalt der Kernlegierung zwischen 0,05 und 0,5 % liegt.

7. Verfahren nach einem der Ansprüche 1 bis 6, **dadurch gekennzeichnet, dass** der Yttriumgehalt der Kernlegierung zwischen 0,01 und 0,5 % liegt.

8. Verfahren nach einem der Ansprüche 1 bis 7, **dadurch gekennzeichnet, dass** die Kernlegierung folgende Zusammensetzung hat:
Si: 0,3-1,0 Fe<0,5 Cu: 0,35-1,0 Mn: 0,3-0,7 Mg: 0,35-0,7 Zn<0,2 Ti<0,1 Zr<0,3 Cr<0,3 Ni<1,0 Co<1,0 Bi < 0,5 Y < 0,5, weitere Elemente jeweils < 0,05 und insgesamt 0,15, Rest Aluminium.

9. Verfahren nach einem der Ansprüche 1 bis 8, **dadurch gekennzeichnet, dass** die Lötlegierung durch Walzplattieren auf die Kernlegierung aufgebracht wird.

10. Verfahren nach einem der Ansprüche 1 bis 9, **dadurch gekennzeichnet, dass** die Lötlegierungsschicht aus Partikeln besteht, die eventuell in einer Harzschicht eingebettet sind.

11. Verfahren nach einem der Ansprüche 1 bis 10, **dadurch gekennzeichnet, dass** es für die Herstellung von Wärmetauschern verwendet wird und das Auslagern während des Betriebs der Wärmetauscher in deren warmen Bereichen erfolgt.
